# EUROPEAN PATENT APPLICATION

(11) **EP 2 879 392 A1**
(43) Date of publication of application: **03.06.2015**
(21) Application number: 13250115.6
(22) Date of filing: 29.11.2013
(51) Int. Cl.: H04N 21/266, H04N 21/4385

(54) **Descrambling of data according to the properties of the control words**

(71) Applicant: British Telecommunications public limited company, London EC1A 7AJ (GB)
(72) Inventor: The designation of the inventor has not yet been filed
(74) Representative: Lidbetter, Timothy Guy Edwin

(57) **Abstract**

Encrypted data transmitted over a data network is decrypted in accordance with a cipher decryption process using a Control Word transmitted with the data. The process is arranged to automatically identify the mode by which the data has been encrypted by identifying (66) the length of the Control Word transmitted with the encrypted data. The Control Word length may be identified (64) from metadata explicitly stating the length, or by analysis of the message in which the Control Word is conveyed. Different encryption modes using Control Words of different lengths can thus be identified, allowing the receiver to identify (67) which of a plurality of decryption modes available to the receiver should be used (69) to decrypt the data.

## Description

This invention relates to a process for receiving data transmitted over a data network, and in particular to the reception of video data streams over the Internet.

Reception of such data may be carried out by a general purpose computer or by a specialised receiver arranged to convert the data into a signal which can be displayed on a television set. These receivers are traditionally known as "set-top boxes" (STBs), although the narrow dimensions of most modern flat-screen television sets make it difficult to actually place anything on top of them, and the receiving devices are more usually placed underneath the television set, or incorporated into a hand-held device in wireless communication with the television set.

It is common for video and other data streams to be encrypted to prevent piracy (e.g. access by users who have not subscribed to the appropriate service) and also to prevent unauthorised access by minors. Parents typically use a PIN or passcode to enable them to unlock the content but the user does not provide the decryption key - keys are always managed by the Conditional Access or DRM system.

Different content providers or operators may use different scrambling algorithms (or ciphers) for protecting content from unauthorised viewing. However, in some circumstances, it can be desirable for receivers of different types to receive the same content, or for content from different providers to be made available to the same receiver. For example, an upgrade to the content provider's system may have to be phased in to allow time for all the customers' receivers to be replaced or upgraded, with the new or upgraded receivers having to operate using the older system until the transition is complete. In another example, customers may wish to subscribe to two or more different services, each including content using different encryption systems.

In order to avoid having to stream multiple copies of each content stream (i.e. one version for each cipher that might be programmed into the receiving apparatus), it would be desirable to adapt the customers' receiving equipment to support both ciphers. However, it would be necessary for the receiving equipment to be able to identify the cipher by which the content currently being received has been encoded. One option is to use a descriptor using the DVB (Digital Video Broadcasting) open standard to signal the cipher type. Such descriptors would not, in general disrupt the operation of receivers that are not programmed to respond to them, but their use does require extra overhead and complexity in the receivers which do detect them, as they would constantly need to monitor for changes in the DVB code and make adaptions in real-time. It also complicates the operator's operational overhead.

According to the invention, the receiving process automatically identifies the cipher encryption mode by which the data has been encrypted by identifying a property of a cipher Control Word characteristic of the encryption mode, and selecting, from a plurality of decryption modes, a decryption process operating in a decryption mode associated with the property so identified. In the preferred embodiment, the property is the length of a Control Word incorporated in the encrypted signal. In the preferred embodiment, the process monitors an indication of Control Word length that is transported as header information in the same message that provides the Control Word itself. This allows the identities of ciphers using different lengths of Control Word to be inferred automatically from the length indicator. Alternative embodiments may be envisaged where the Control Word length can be determined directly, for example if packets containing short Control Words include null data in a standard format to fill the spare part of the packet, if standardised codes appear at the beginning and end of the Control Word. If the Control Words include check digits or parity bits, validity checks on the candidate bit strings can be used to determine which one is valid.

The embodiment to be described relates to management of a transition from one encryption system to another, but other applications of the invention are possible. For example, different Control Word lengths may be used for different levels of security.

As part of the transition process, each user's receiving equipment has to be upgraded to operate on the new encryption system. This may be done by replacing the users' hardware, or by means of a download to reprogramme the existing hardware. In either case, there is inevitably a transitional period when some receivers have been upgraded and others have not. It is obviously not possible to synchronise the delivery and installation of a large number of receiving apparatus hardware, and even if the upgrade is done by downloading, some receivers may be offline (or already downloading some content) when the download was first offered, and some receivers may be found to be unsuitable for the upgrade process and have to be replaced.

Transitional situations may also occur if content using the both encryption systems are available simultaneously during the transition period, for example if the content provider has to take each of a plurality of servers out of service one at a time to upgrade them, so that not all the servers are delivering material using the encryption cipher.

In order to manage the transitional period, without having to stream two copies of each program (i.e. one version for each cipher), the upgraded set top boxes are arranged to support both ciphers. The upgrades can be done over a period of time in advance of the first transmissions using the new cipher. This allows the content delivery servers to also be converted over a period of time, and it also allows reversion to the old cipher system, should technical problems at the content provider's server make such a step necessary.

It would be cumbersome and slow to attempt decryption by both methods and select the more coherent result. The invention provides a method to automatically allow the receiving equipment to identify the cipher system in use. This is achieved by monitoring the standard entitlement control message (ECM) that provides the descrambling key (Control Word) for an indication of the length of that Control Word. As different ciphers use Control Words of different lengths, this allows the receiver to identify which cipher is in use, and thus which decryption algorithm to use.

As described above, inherent characteristics other than length may be used: for example if one or other system uses an *entropy reduction* process, in which one or more bits in each Control Word are determined from a combination of other bits in the Control Word (for example a check-digit or parity-bit), the success or failure of the check process can be used to determine which system is in use.

It should be understood that operation of the invention allows the decryption process to be identified, but does not compromise it. Each receiving device must still be in possession of the appropriate decryption algorithm for each cipher system in use, and must also be in possession of the actual decryption keys to be able to decrypt the data - the process merely identifies which of several decryption ciphers (algorithms) available to it should be used to decrypt the data currently being delivered.

In the preferred embodiments, the descrambler is only configured to re-set the cipher mode if a change in encryption method is detected. It may be the case that the content delivery is switched from one delivery server to another during the course of the programme, for example, for load-balancing or other reasons. Performing the configuration process during the reception of streamed content can cause brief interruptions in the audio/visual output and it is therefore preferable to avoid a reconfiguration unless it is actually necessary.

The process is preferably implemented by software controlling the operation of the receiving apparatus. The use of software allows an existing receiver to be automatically reconfigured by means of a plug-in or other download method so that an existing receiver can be used to operate the invention. This allows a service provider to manage transition from one ciphering system to another without replacement of the hardware, or manual intervention (whether by a skilled technician or an untrained customer).

An embodiment of the invention will now be described, with reference to the drawings, in which:
Figure 1 is a schematic representation of a broadcast or multicast distribution network.
Figure 2 is a schematic representation of the simultaneous encryption system with which the invention is intended to operate.
Figure 3 is a schematic representation of the components within a receiver which co-operate to perform the invention.
Figure 4 is a flow chart illustrating the operation of an embodiment of the invention in more detail.

For the purpose of illustration, a content provider 1 requires to deliver a range of television channels 11, 12, 13 over a data communications network 2 typically using a terrestrial, satellite, cable or multicast IP network to deliver content two different types of receiving apparatus 3, 4 (one of each type shown , but in practice there would be a large number of each). These receivers 3, 4 are depicted as set top boxes (STBs) configured to receive and process video content, but the invention may be used with other types of receiving apparatus for receiving different types of content. The first type of receiving apparatus 3 is configured to use a Conditional Access System (CAS) with a 64-bit CSA (Common Scrambling Algorithm) scrambling cipher. The second type of receiving apparatus 4 uses a different CAS with "Advanced Encryption Standard" AES-128 scrambling cipher.

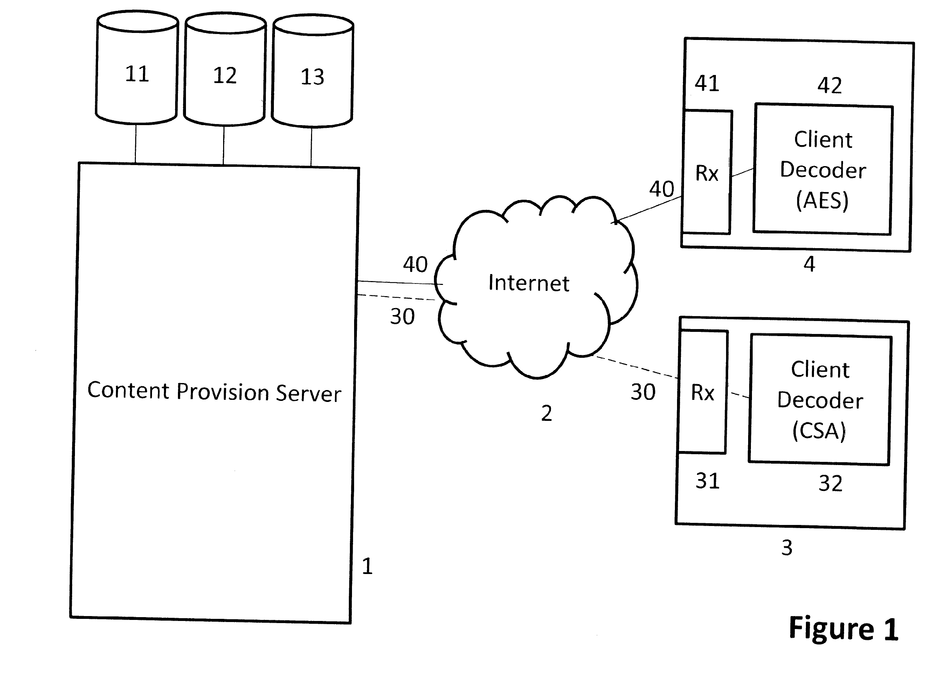

As shown in Figure 1, the content provider 1 could simulcast each TV channel, carrying both a CSA scrambled stream 30 and an AES scrambled stream 40, to allow the receiver 31, 41 in each client device 3, 4 to access the appropriate format for its respective decoder 32, 42. However, this would require double the bandwidth to carry separate broadcast channels or multicast streams for each format, and the client device would need to be configured to identify the appropriate content for which it is configured.

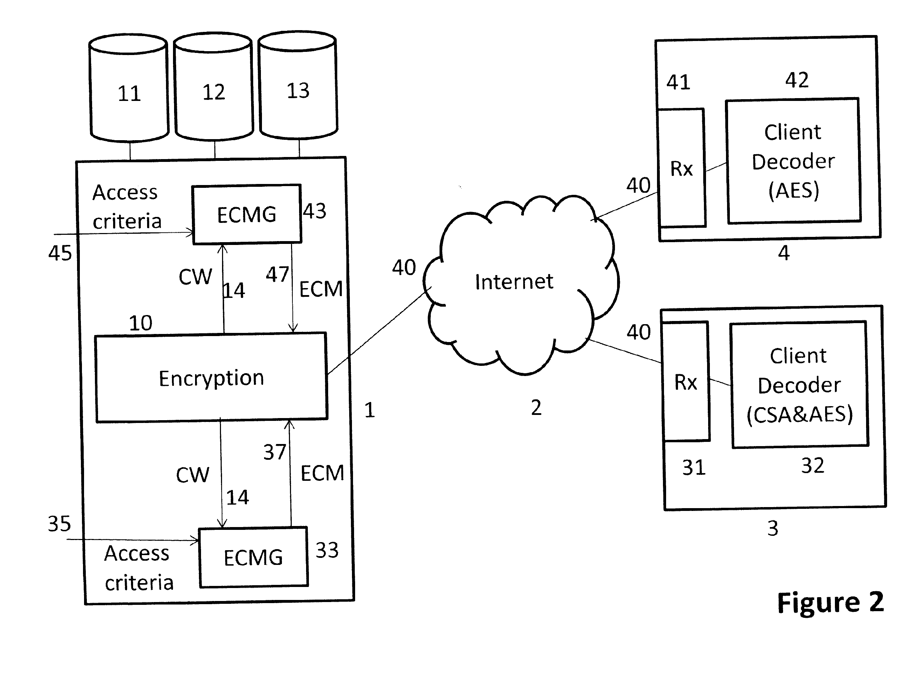

To avoid the need for such duplication a Digital Video Broadcasting (DVB) Simulcrypt process can be used, as shown in figure 2, to enable both decoder types 32, 42 to be used with the same AES-128 scrambling process. Simulcrypt is a well-developed and widely used standard that enables several conditional-access (CA) vendors to make the same encrypted content available to their clients.

The simulcrypt process is shown in more detail in Figure 2. A scrambler 10 generates a random 128-bit Control Word (CW) 14 for each crypto period using its internal Control Word Generator (CWG). As shown in fig. 2, the scrambler 10 communicates with multiple entitlement control message (ECM) generators (ECMG) 33, 43 using the SCS/ECMG Simulcrypt protocol (as defined in ETSI TS 103197). Each ECMG 33, 43 uses an Access Criteria (AC) reference 35, 45 and the Control Words 14 to create a respective ECM 37, 47. The ECMs typically actually contain a set of two or more Control Words, to be used in respect of the current and one or more later crypto periods. The delivery of two or more consecutive Control Words allows the receiving apparatus to carry out the processing necessary to prepare for decryption in the next crypto period during the progress of the current crypto period. For the purposes of the present example, an ECM with two Control Words will be described, the two Control words being referred to respectively as "odd" and "even".

Each ECM 37, 47 carries the Control Words (CW) 14 in encrypted form, suitable for the respective encryption algorithm of the controlled access system vendor. The encryption algorithm used to encrypt the Control Words is proprietary to the vendor and not normally publicised.

The Entitlement Control Messages 37, 47 are both transmitted by the encryption unit 10 with the scrambled video data 40, to allow decoders 32, 42 of both types to decode the same encrypted data.

The simulcrypt process allows both types of receiver to use entitlement control messages with the same set of one or more 128-bit Control Words 14 in encrypted form, albeit encrypted differently, enabling both types of receiver to descramble the same data stream. However, in the example described above, the first type of receiving apparatus 3 uses a Conditional Access System (CAS) with a DVB CSA (Common Scrambling Algorithm) scrambling cipher, which uses two 64-bit Control Words carried in an ECM. The second type of receiving apparatus 4 uses a different CAS with "Advanced Encryption Standard" AES-128 scrambling cipher, which uses two 128-bit Control Words embedded in an ECM

In order to make the first receiving apparatus 3 capable of operating with the simulcrypt system it must be adapted to use the AES scrambling cipher with 128-bit Control Words. This can be readily achieved by a software upgrade.

The existing client which uses the older DVB-CSA encryption system, can be modified to detect whether the AES-128 cipher is to be used instead.

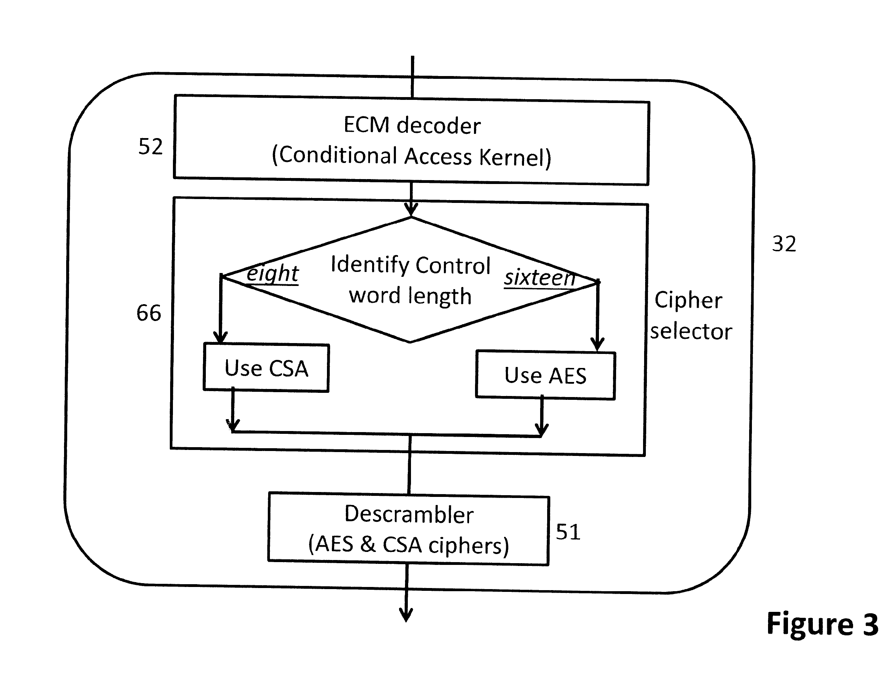

Figure 3 depicts a Descrambling processor component 51 in the receiver 3, which provides an application programming interface (API) that is called by an ECM decoder 52 (running on a Conditional Access Kernel (CAK)) to pass Control Words from ECMs in order to descramble incoming transport streams. As explained above, the API enables the ECM decoder to pass two keys ("odd" and "even") for a particular stream. The AES-128 cipher capability is added to the device via a software update to supplement the existing DVB-CSA cipher capability. The Descrambler module 51 is updated to set the appropriate cipher configuration, CSA or AES-128, according to which cipher is to be used. The modifications required to the descrambler 51 can be conveniently done by a downloaded upgrading process.

However, it is not feasible to upgrade the software in all receivers 3 of this type at the same instant that the head end changes its encryption system, so it is desirable that the transition is managed by first making these receivers capable of supporting both AES and CSA ciphers, so as to facilitate the switchover to AES. This will also allow regression back to CSA, if this should prove necessary. In order to make this process transparent to the user, it is desirable that the receiver can automatically detect when the cipher changes, and adapt accordingly without requiring a reboot or channel change.

The Descrambler 51 has first to determine which, of the two ciphers it is now capable of using, is to be used to decrypt each packet that is received. The present invention provides for the Descrambler module 51 to automatically detect some characteristic of the control message. This could be done by attempting to decipher a sample data string using each process and determining which produces a coherent result, or by using parity or other check digits. However, in the preferred embodiment, information in the control word header indicative of the length of the control word is used. This is a simple process, requiring no comparison of one test with another, and makes use of ECM data provided by the ECM decoder to the Descrambler.

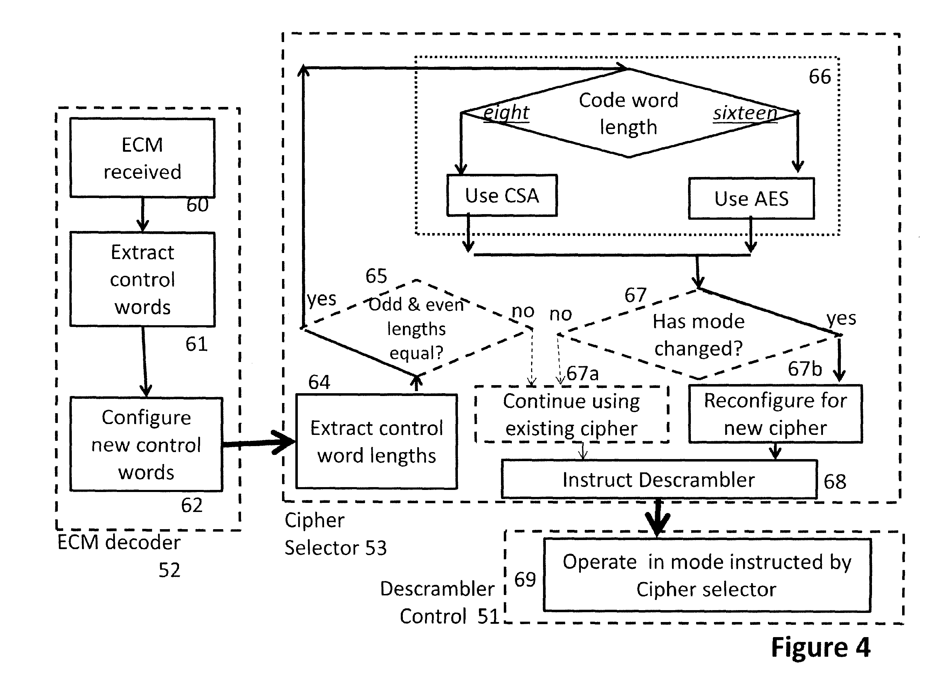

The operation of the invention will now be described with reference to Figure 4. The dotted lines in this Figure indicate which component of the device abstraction layer (Figure 3) performs each part of the process.

When a new ECM is received at the input 31 (e.g. after changing channel or when the Crypto Period changes) (step 60) the ECM decoder 52 extracts the odd and even Control Words (step 61). As well as the Control Words themselves, the ECM carries additional information which includes the length of the Control Words (this length may be encrypted or provided in the clear). This length is passed from the ECM decoder 52 to the Cipher Selector 53 via the API 62 that provides the Control Words.

For example, it may be "8" bytes for DVB-CSA and "16" bytes for AES-128. The ECM decoder 52 calls the cipher selection process 53 to set a new descrambling key. In some implementations it may be possible to configure the cipher to be used for each cryptoperiod so the correct cipher is always used to decode each encrypted packet. In other implementations the software may configure the descrambling cipher at the estimated time it expects the new cipher to be used. This may result in a small video or audio glitch or brief decoding error but this is generally acceptable as the head-end configuration may take some time and result in temporary loss of service.

This cipher configuration 53 is performed whenever the first ECM is received after selecting a new channel and also if the Control Word Length parameter differs from the value last seen (i.e. if it differs from the value passed in the last ECM received). The Control Word length is normally exposed via an API that a Conditional Access Kernel calls every cryptoperiod to set the descrambling keys.

In both cases the Cipher Selector 53 calls the appropriate Cipher Selection API to select the appropriate cipher depending on the Control WordW. The cipher selector 53 first extracts the control word length data for the next two control words (step 64). Normally the Control Word length for odd and even Control Words are identical. If they differ, (identified at step 65) the Cipher Selector may use this information to ensure the appropriate cipher is used for packets in each cryptoperiod, thereby ensuring a perfectly clean transition from one cipher to another with no decoding error. In other cases the Cipher Selector may be configured to ignore ECMs with different length Control Words (step 67a).

Assuming that a Control Word length can be unambiguously identified, the cipher to be used is next determined (step 66)

| Control Word length (bytes) | Cipher to use |
|---|---|
| 8 | DVB-CSA |
| 16 | (AES-128) |

The cipher selector then determines if the mode has changed (step 67) and, if so (67b), it sets up an instruction (68) for the descrambler to switch modes. Otherwise, (67a), the default condition is to instruct the descrambler to continue to code using the cipher previously in use, until an uncorrupted ECM is received. Calling the API to select a cipher and set up the descrambling process takes more processing time than using the descrambling process that is already set up, and may cause brief interruptions in the audio/video output. The cipher mode should therefore not be reset if the Control Word length is unchanged, indicating that the descrambling process already set up should continue to be used. The cipher mode should also not be reset if the Control Word length is indeterminate, e.g because the header data has been corrupted. Cipher changes are relatively rare and so, in the absence of a clear indication to the contrary (i.e an uncorrupted Control Word) it is probable that any individual ECM uses the same cipher as the previous one. Moreover, if the packet has been corrupted so that the Control Word length is indeterminate, it is probable that it could not be successfully deciphered anyway. Error correction is applied to decoded packets, and ECM packets would normally be protected with a CRC or checksum so invalid packets will automatically be discarded.

In either case, an instruction 68 is sent to the descrambler 51 to use the Code Words extracted (at step 64), either using the ciphering mode previously used (as the default condition) or, if a reconfiguration instruction has been generated (step 67b) after reconfiguration to that different mode. The descrambler 51 then operates (69) in accordance with the instructions received from the driver 53.

The ciphering method may change even during download of a single stream, for example if for load-balancing purposes different parts of the content are delivered from different content servers. If this occurs, the receiver can detect the cipher changes automatically, and select the appropriate descrambling cipher. If the video content is being viewed "live" the processor will have to respond to cipher changes reactively. However, if the content is being recorded it may be descrambled before being recorded (or perhaps re-encrypted using a different key). Alternatively, the cipher change point can be flagged in the stored data, so that the playback system can pre-set the cipher change points as the playback progresses.

Many types of receiving apparatus are arranged to receive two or more streams simultaneously. This allows one programme to be recorded whilst another is being viewed live, or for two programmes to be recorded simultaneously. In a preferred arrangement, a set top box according to the invention is arranged such that it can receive and decrypt separate streams using different coding systems simultaneously, for example decrypting a CSA scrambled stream and an AES scrambled stream simultaneously by detecting the inherent characteristics (e.g code word length) of the two streams individually.

Alternatively, if processing power is not available to support both encryption systems simultaneously, one of the streams may be stored in encrypted form for later decoding, to ensure that the sufficient processing power is available to decode the other to be displayed in "real time", that is to say, as soon as it is received, with minimal coding lag.

## Claims

1. A process for receiving encrypted data transmitted over a data network, the receiving process being arranged to decrypt the data in accordance with a Control Word and cipher decryption process, wherein the process is arranged to automatically identify a cipher encryption mode by which the data has been encrypted by identifying a property of the Control Word characteristic of the encryption mode, and selecting, from a plurality of decryption modes, a decryption process operating in a decryption mode associated with the property so identified.

2. A process according to claim 1, in which the decryption mode is identified by determining the length of the Control Word incorporated in the encrypted signal.

3. A process according to Claim 2, wherein the process identifies the length of the Control Word from metadata carried in an encryption control message containing the Control Word.

4. A process according to Claim 2, wherein the process identifies the length of the Control Word from the presence or absence of null data in a standard format in part of a data packet also containing the Control Word

5. A process according to Claim 1 or Claim 2, wherein the process identifies the decryption mode to be used by determining whether one of a plurality of bit strings extracted from the data packet containing the Control Word passes a validity check

6. A process according to claim 5 wherein a validation check is performed on a portion of the data associated with a Control Word extracted from the data, the validation process being associated with one of the encryption processes, such that the result of the validation check is indicative of the encryption process by which the data was encrypted.

7. A process according to any preceding claim, arranged to operate in a mode in which the decryption process is reconfigured for a block of data if the identification process positively identifies the associated Control Word as being associated with a mode other than the mode used for a preceding block of data, and if the identification process identifies the associated Control Word as being associated with a configuration used for the preceding block of data property, or fails to make a positive identification, remains in the pre-existing configuration.

8. A process according to any preceding claim, in which separate data streams can be decrypted using different decryption modes simultaneously, by detecting the inherent characteristics of Control Words incorporated in the individual streams.

9. A process according to any preceding Claim, in which separate data streams can be received, in different encrypted forms, and wherein at least one of the streams may be stored in encrypted form for later decoding.

10. An apparatus for receiving and processing encrypted data transmitted over a data network, the apparatus comprising a receiver for receiving the encrypted data from an external source, a decoder for decrypting the data in accordance with a Control Word and cipher decryption process, and a processor for automatically identifying an encryption mode by which the data has been encrypted, the processor being arranged to analyse a Control Word associated with the received data to identify a property of the Control Word characteristic of the encryption mode and to select, from a plurality of decryption modes, a decryption process operating in a decryption mode associated with the property so identified.

11. An apparatus according to claim 10, wherein the analyser is arranged to determine the length of the Control Word incorporated in the encrypted signal.

12. An apparatus according to Claim 10, wherein the analyser is arranged to identify the length of the Control Word from metadata carried in an encryption control message containing the Control Word.

13. An apparatus according to claim 10, claim 11 , or claim 12, arranged to operate in a mode in which the decryption mode is reconfigured for a block of data if the identification process positively identifies the associated Control Word as being associated with a mode other than the mode used for a preceding block of data , if the identification process identifies the associated Control Word as being associated with the configuration used for the preceding block of data property, or fails to make a positive identification, performs no reconfiguration by default.

14. An apparatus according to claim 10, claim 11, claim 12, or claim 13, having a plurality of decryption processors in which separate data streams can be decrypted using different decryption modes simultaneously, by detecting the inherent characteristics of Control Words incorporated in the individual streams.

15. An apparatus according to claim 10, claim 11, claim 12, claim 13 or claim 14, having a storage medium in which a first data stream may be stored in encrypted form whilst a second data stream is being decrypted.
